# FASCICULE DE BREVET EUROPEEN

(11) **EP 4 311 434 B1**
(45) Date de publication et mention de la délivrance du brevet: **03.09.2025**
(21) Numéro de dépôt: 23187929.7
(22) Date de dépôt: 26.07.2023
(51) Int. Cl.: A22C 25/14, B65G 51/00

(54) **INSTALLATION POUR ENLEVER DES ÉLÉMENTS INDÉSIRABLES DE LA CAVITÉ ABDOMINALE DE POISSONS ÉVISCÉRÉS**
VORRICHTUNG ZUM ENTFERNEN UNERWÜNSCHTER ELEMENTE AUS DER BAUCHHÖHLE VON GESCHLACHTETEN FISCHEN
INSTALLATION FOR REMOVING UNDESIRABLE ELEMENTS FROM THE ABDOMINAL CAVITY OF GUTTED FISH

(30) Priorité: 29.07.2022 FR 2207832
(43) Date de publication de la demande: 31.01.2024
(73) Titulaire: Op Vendee, 85100 Les Sables-d'Olonne (FR)
(72) Inventeur: LIAIGRE, Guy, 79250 NUEIL-LES-AUBIERS (FR)
(74) Mandataire: Jacobacci Coralis Harle

(56) Documents cités:
- WO-A1-2007/128386
- DE-A1- 19 829 376
- DE-C2- 3 343 789
- FR-A1- 2 616 625
- US-B1- 7 179 163

## Description

### Domaine technique de l'invention

La présente invention concerne le domaine de l'industrie de la pêche.

Elle concerne plus particulièrement une installation qui permet d'enlever des éléments indésirables de la cavité abdominale de poissons éviscérés, par exemple des reliquats de viscères et/ou des parasites.

### Etat de la technique

Pour leur présentation à la vente et leur consommation, après la pêche, les poissons subissent une opération d'éviscération qui peut être réalisée manuellement ou au moyen de machines automatiques, directement sur le navire de pêche, ou postérieurement, par exemple dans l'atelier d'un mareyeur.

Cependant, malgré le soin apporté à cette opération, il peut persister des reliquats de viscères et/ou des parasites attachés à la paroi abdominale des poissons.

En particulier, certains poissons peuvent être infestés par des vers de type « anisakis », susceptibles après ingestion de provoquer chez l'homme une parasitose digestive dénommée « anisakidose », pouvant entraîner des réactions allergiques parfois graves.

Toutes les espèces de poissons sont potentiellement porteuses de l'anisakis, et depuis plusieurs années, les marins professionnels, les mareyeurs ainsi que les vétérinaires constatent une présence accrue de ce parasite dans les poissons capturés.

L'évolution actuelle du mode de consommation des produits de la mer vers des préparations de produits crus ou peu cuits, fumés, marinés, salés tels que les sushis, le carpaccio, le poisson fumé, etc., augmente l'exposition des consommateurs à un tel risque de parasitose.

Il existe donc un besoin de proposer une solution technique pour nettoyer efficacement la paroi abdominale des poissons, après éviscération, en particulier pour limiter voire supprimer la présence de tels parasites. Différents dispositifs de nettoyage des poissons sont décrits dans les documents US 7 179 163 B1, DE 33 43 789 C2, FR 2 616 625 A1, WO 2007/128386 A1 et DE 198 29 376 A1.

### Présentation de l'invention

Pour cela, la présente invention propose une installation pour enlever de la cavité abdominale de poissons éviscérés des éléments indésirables tels que des parasites et/ou des restes de viscères, cette installation étant caractérisée par le fait qu'elle comprend un outil de grattage et d'aspiration comprenant un canal d'aspiration muni d'une extrémité proximale et d'une extrémité distale,
laquelle extrémité distale dudit canal d'aspiration comprend un orifice d'aspiration et des moyens de grattage adaptés pour gratter la paroi de la cavité abdominale des poissons,
et laquelle extrémité proximale dudit canal d'aspiration est raccordée à des moyens de mise en dépression adaptés pour aspirer lesdits éléments indésirables. L'installation comprend aussi des moyens d'apport d'eau pour apporter de l'eau au niveau dudit orifice d'aspiration de l'outil de grattage et d'aspiration.

Les moyens de grattage permettent de détacher les éléments indésirables (tels que des restes de viscères et/ou des parasites) de la paroi abdominale du poisson ; et les moyens d'aspiration permettent d'évacuer ces éléments indésirables, par exemple vers un conteneur dédié.
Les parasites récupérés peuvent ensuite être détruits par tout moyen approprié.

D'autres caractéristiques non limitatives et avantageuses de l'installation conforme à l'invention, prises individuellement ou selon toutes les combinaisons techniquement possibles, sont les suivantes :
- les moyens de grattage peuvent comprendre au moins une lame de grattage mobile disposée au niveau de l'orifice d'aspiration de l'outil de grattage et d'aspiration ;
- l'extrémité distale de l'outil de grattage et d'aspiration peut être en forme de tube comprenant un axe longitudinal de tube, lequel tube est muni dudit orifice d'aspiration équipé desdits moyens de grattage, ladite au moins une lame de grattage étant entrainée en rotation, dans un plan perpendiculaire audit axe longitudinal de tube, par un arbre d'entrainement motorisé centré sur ledit axe longitudinal de tube ;
- les moyens d'apport d'eau peuvent comprendre : (a) des moyens d'alimentation en eau, et (b) ledit arbre d'entrainement motorisé qui est creux et qui comprend une cavité interne,

laquelle cavité interne comprend une extrémité proximale qui est connectée auxdits moyens d'alimentation en eau, et laquelle cavité interne comprend une extrémité distale qui débouche par un orifice d'alimentation en eau au niveau dudit orifice d'aspiration ;
   - l'installation peut comprendre des moyens moteurs à courant d'eau pour l'entrainement en rotation de l'arbre d'entrainement motorisé, lesquels moyens moteurs à courant d'eau peuvent comprendre un organe mécanique d'entrainement adapté pour être entrainé en rotation par un courant d'eau provenant desdits moyens d'alimentation en eau ;
   - lesdits moyens moteurs à courant d'eau peuvent comprendre (a) une chambre de moteur munie d'au moins une entrée d'eau amont connectée auxdits moyens d'alimentation en eau et d'au moins une sortie d'eau aval connectée à une canalisation d'évacuation d'eau, (b) un organe mécanique d'entrainement en forme de cône creux, disposé dans ladite chambre de moteur, comprenant une grande base et une petite base, laquelle grande base est délimitée par un contour circulaire et est en forme de large ouverture orientée vers ladite entrée d'eau amont, et laquelle petite base se prolonge par ledit arbre d'entrainement motorisé,
lequel arbre d'entrainement motorisé traverse une paroi de ladite chambre de moteur à proximité de ladite au moins une sortie d'eau aval,
la surface intérieure de ladite chambre de moteur située en regard dudit contour circulaire de la grande base dudit organe mécanique d'entrainement, ayant la même forme que ledit contour circulaire, avec un léger jeu entre les deux pour permettre le passage d'un flux d'eau nécessaire à la mise en rotation dudit organe mécanique d'entrainement ;
   - la chambre de moteur peut comprendre une paroi périphérique centrale tronconique qui entoure ledit organe mécanique d'entrainement en forme de cône, l'angle au sommet de ladite paroi périphérique centrale tronconique étant inférieur à l'angle au sommet dudit organe mécanique d'entrainement ;
   - l'extrémité proximale du canal d'aspiration de l'outil de grattage et d'aspiration peut se prolonger par une tubulure d'aspiration qui aboutit dans le volume interne d'une cuve de collecte, pour la collecte desdits éléments indésirables, lesdits moyens de mise en dépression comprenant au moins une pompe à vide agencée pour tendre à faire le vide dans le volume interne de ladite cuve de collecte ;
   - l'installation peut comprendre plusieurs outils de grattage et d'aspiration qui se prolongent chacun par une tubulure d'aspiration aboutissant dans le volume interne d'une même cuve de collecte, pour la collecte desdits éléments indésirables.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique d'ensemble montrant une forme de réalisation possible d'une installation conforme à l'invention ;
[Fig. 2] est une vue schématique en coupe longitudinale d'un outil de grattage et d'aspiration de l'installation illustrée sur la figure 1 ;
[Fig. 3] est une vue en perspective de l'extrémité de l'outil de grattage et d'aspiration illustré sur la figure 2.

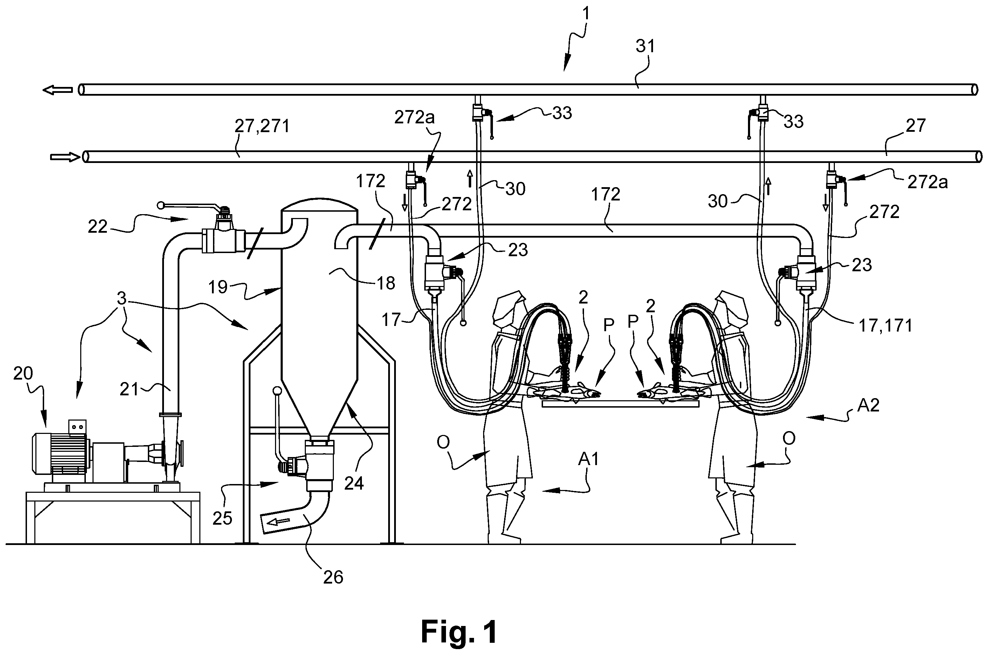

L'installation 1 illustrée schématiquement sur la figure 1 comprend ici deux postes de travail A1, A2 adaptés pour enlever de la cavité abdominale de poissons P éviscérés, des éléments indésirables tels que des parasites et/ou des restes de viscères.

Pour cela, chaque poste de travail A1, A2 de l'installation 1 comprend un outil de grattage et d'aspiration 2, destiné à être utilisé/manipulé par un opérateur O pour gratter la paroi abdominale des poissons P éviscérés, et qui est raccordé à des moyens de mise en dépression 3 adaptés pour aspirer et évacuer les éléments indésirables grattés et détachés.

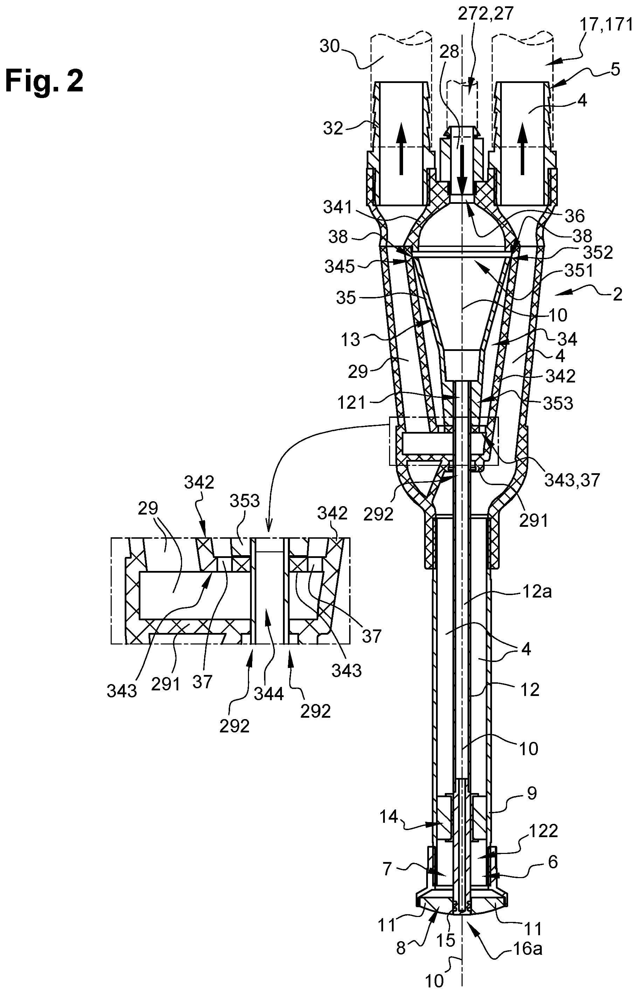

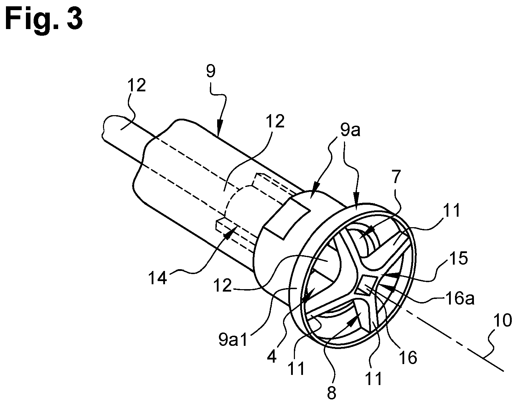

L'outil de grattage et d'aspiration 2 est illustré schématiquement et de manière isolée sur les figures 2 et 3.

Cet outil de grattage et d'aspiration 2 comprend un canal d'aspiration 4 muni d'une extrémité proximale 5 et d'une extrémité distale 6.

L'extrémité distale 6 du canal d'aspiration 4 comprend un orifice d'aspiration 7 et des moyens de grattage 8 adaptés pour gratter la paroi de la cavité abdominale des poissons P.

L'extrémité proximale 5 du canal d'aspiration 4 est raccordée aux moyens de mise en dépression 3 adaptés pour aspirer les éléments indésirables grattés et détachés par les moyens de grattage 8.

Comme on peut le voir sur les figures 2 et 3, l'extrémité distale 6 de l'outil de grattage et d'aspiration 2 se présente sous la forme d'un tube 9 qui comprend un axe longitudinal de tube 10, et qui se termine par l'orifice d'aspiration 7 précité, équipé des moyens de grattage 8.

Les moyens de grattage 8 comprennent au moins une lame de grattage 11 mobile disposée au niveau de l'orifice d'aspiration 7 de l'outil de grattage et d'aspiration 2 ; et cette au moins une lame de grattage 11 est entrainée en rotation, dans un plan perpendiculaire à l'axe longitudinal de tube 10, par un arbre d'entrainement 12 motorisé centré sur ledit axe longitudinal de tube 10.

L'arbre d'entrainement 12 est entraîné en rotation par des moyens moteurs 13 détaillés plus loin dans la description.

Au niveau de l'extrémité distale 6 de l'outil de grattage et d'aspiration 2, l'arbre d'entrainement 12 est maintenu centré dans le tube 9, sur l'axe longitudinal de tube 10, par une structure de pallier 14.

Cette structure de pallier 14 est adaptée pour ne pas obstruer complètement le canal d'aspiration 4 en vue de permettre l'aspiration des éléments indésirables grattés et détachés par les moyens de grattage 8.

L'arbre d'entrainement 12 est ici un arbre creux comprenant un canal central 12a qui débouche à chacune de ses extrémités, pour des raisons également expliquées plus loin dans la description.

Les moyens de grattage 8 comprennent ici un ensemble de quatre lames de grattage 11 disposées de manière rayonnée à partir d'un bloc central 15.

L'ensemble monobloc formé du bloc central 15 et des lames de grattage 11 est solidarisé avec l'extrémité de l'arbre d'entraînement 12 par tout moyen approprié, de préférence par des moyens de solidarisation amovibles. Ces moyens de solidarisation peuvent consister en des moyens d'emboitement amovibles (par exemple de type empreinte centrale 16 carrée, ou plus généralement polygonale).

Comme on peut le voir sur les figures 2 et 3, un carter de protection 9a peut être monté à l'extrémité libre du tube 9 pour protéger le pourtour des lames de grattage 11.

Ce carter de protection 9a est emmanché par emboitement sur l'extrémité libre du tube 9 avant le montage de l'ensemble bloc central 15/lames de grattage 11. Son extrémité libre est en forme de couronne circulaire 9a1 adaptée pour venir se positionner sur le côté des lames de grattage 11, tout en maintenant la tranche de ces dernières en saillie pour permettre l'opération de grattage.

On comprend que le grattage recherché est obtenu par la tranche des lames de grattage 11 sous l'effet de leur rotation autour de l'axe longitudinal de tube 10.

L'empreinte centrale 16 traverse le bloc central 15 pour former une ouverture traversante 16a qui communique avec le canal central 12a de l'arbre d'entrainement 12.

Les moyens de mise en dépression 3 (ou moyens d'aspiration 3) comprennent une tubulure d'aspiration 17 qui relie l'extrémité proximale 5 du canal d'aspiration 4 de l'outil de grattage et d'aspiration 2 et le volume interne 18 d'une cuve de collecte 19 (qui peut être réalisée en inox).
Et le volume interne 18 de la cuve de collecte 19 est de son côté relié à une pompe à vide 20 par une canalisation 21.

La canalisation 21 peut être réalisée en inox ; elle est équipée d'une vanne 22 de type vanne sectionnelle ou à boisseau sphérique, manuelle ou actionnée par poumon pneumatique.

La tubulure d'aspiration 17 est également équipée d'une vanne 23 de type vanne sectionnelle ou à boisseau sphérique, manuelle ou actionnée par poumon pneumatique.

Cette tubulure d'aspiration 17 comprend :
- un premier tronçon 171 qui relie la vanne 23 et l'extrémité proximale 5 du canal d'aspiration 4 de l'outil de grattage et d'aspiration 2, et
- un second tronçon 172 qui relie la vanne 23 et la cuve de collecte 19.

Le premier tronçon 171 de la tubulure d'aspiration 17 est réalisé en un matériau flexible/souple (par exemple en tuyau souple annelé pour ne pas s'écraser avec le vide, ou en Néoprène (marque déposée) souple d'épaisseur adaptée), pour faciliter les manœuvres de grattage de la cavité abdominale des poissons P par l'opérateur O.

Le second tronçon 172 de la tubulure d'aspiration 17 peut être réalisé en inox.

La pompe à vide 20 peut être une pompe de type turbine ou anneau liquide ou pompe à lobes. La dépression à atteindre peut être de l'ordre de 500 mbar ; et la puissance utile d'entrainement peut être de 4 kW. Sur un bateau cette motorisation peut être réalisée par un moteur hydraulique raccordé sur la centrale hydraulique existante.

Comme illustré sur la figure 1, le fond 24 de la cuve de collecte 19 peut être en forme d'entonnoir dont les parois convergent vers un orifice central inférieur équipé d'une vanne 25 (par exemple du type vanne on/off à commande manuelle) qui se prolonge par une tubulure d'évacuation 26 (par exemple réalisée en inox).

L'extrémité proximale 5 du canal d'aspiration 4 de l'outil de grattage et d'aspiration 2 se présente ici sous la forme d'un manchon tubulaire sur lequel vient s'emmancher à force l'une des extrémités du premier tronçon 171 de la tubulure d'aspiration 17 souple.

Selon un mode de réalisation particulièrement intéressant, l'installation comprend des moyens d'apport d'eau 27 adaptés pour apporter de l'eau au niveau de l'orifice d'aspiration 7 de l'outil de grattage et d'aspiration 2, de manière à optimiser le nettoyage de la paroi abdominale des poissons par les moyens de grattage 8 ; et, comme expliqué ci-dessous, ces moyens d'apport d'eau 27 sont avantageusement utilisés pour entrainer en rotation l'arbre d'entraînement 12 des moyens de grattage 8.

Pour cela, comme on peut le voir sur la figure 1, les moyens d'apport d'eau 27 comprennent une canalisation principale d'apport d'eau 271 (par exemple en inox), à partir de laquelle s'étend une tubulure flexible 272 d'alimentation en eau pour chaque outil de grattage et d'aspiration 2.

La canalisation principale d'apport d'eau 271 peut être connectée au réseau d'eau de la ville.

La tubulure flexible 272 est reliée à l'outil de grattage et d'aspiration 2 par l'intermédiaire d'un manchon de connexion 28, tubulaire ; et elle est raccordée à la canalisation principale d'apport d'eau 271 par l'intermédiaire d'une vanne 272a (par exemple une vanne de type on/off à commande manuelle).

La canalisation principale d'apport d'eau 271 et la tubulure flexible 272 d'alimentation en eau forment des moyens d'alimentation en eau 271, 272 pour l'outil de grattage et d'aspiration 2.

Partant du manchon de connexion 28, l'eau d'alimentation transite par les moyens moteurs 13, ici des moyens moteur du type à courant d'eau. Une partie de cette eau d'alimentation ayant transité par les moyens moteurs 13 passe par le canal central 12a de l'arbre d'entraînement 12 pour ressortir par l'ouverture traversante 16a, au niveau de l'orifice d'aspiration 7 (permettant de « mouiller » la cavité abdominale des poissons lors de l'opération de grattage) ; et le reste de l'eau d'alimentation ayant transité par les moyens moteurs 13 est évacuée, par exemple vers les eaux usées, via :
- une canalisation d'évacuation 29 interne à l'outil de grattage et d'aspiration 2,
- une tubulure en matériau souple/flexible 30, et
- une conduite rigide 31 d'évacuation (par exemple en inox).

L'ouverture traversante 16a forme un orifice d'alimentation en eau pour l'outil de grattage et d'aspiration 2.

La canalisation d'évacuation 29 de chaque outil de grattage et d'aspiration 2 comprend un prolongement en forme de manchon tubulaire 32 adapté pour le raccordement de la tubulure en matériau flexible 30 associée.

Au niveau de leur autre extrémité, les tubulures en matériau flexible 30 sont raccordées à la conduite rigide 31 par l'intermédiaire d'une vanne 33, par exemple du type vanne on/off à commande manuelle.

Comme on peut le voir sur la figure 2, les moyens moteurs 13 à courant d'eau comprennent une chambre de moteur 34 au sein de laquelle on crée un courant d'eau, et dans laquelle est logé un organe mécanique d'entraînement 35, agencé pour être entraîné en rotation par le courant d'eau, et qui est en prise avec l'arbre d'entrainement motorisé 12.

La chambre de moteur 34 comprend une entrée d'eau amont 36 connectée aux moyens d'alimentation en eau 271, 272 et une ou plusieurs sortie(s) d'eau aval 37 connectée(s) à la canalisation d'évacuation 29 précitée.

En l'occurrence, cette chambre de moteur 34 comprend :
- une paroi amont 341, ici en forme générale de calotte sphérique, dans laquelle débouche l'entrée d'eau amont 36,
- une paroi périphérique centrale 342, de forme générale tronconique, et
- une paroi aval 343 (ici plane) dans laquelle sont ménagées la ou les sortie(s) d'eau aval 37.

La grande base de la paroi périphérique centrale tronconique 342 de la chambre de moteur 34 est orientée vers la paroi amont 341 en forme générale de calotte sphérique ; et la petite base de la paroi périphérique centrale tronconique 342 de la chambre de moteur 34 est orientée vers la paroi aval 343.

L'organe mécanique d'entraînement 35 se présente sous la forme d'un cône creux, disposé dans la chambre de moteur 34, et centré sur l'axe longitudinal de tube 10.

Ce cône creux 35 comprend une grande base 351 délimitée par un contour circulaire 352, qui forme une large ouverture orientée vers l'entrée d'eau amont 36. Il comprend également une petite base 353 qui est orientée vers paroi aval 343 de la chambre de moteur 34.

L'arbre d'entrainement motorisé 12 s'étend depuis la petite base 353 du cône creux 35 jusqu'à l'orifice d'aspiration 7.

Plus précisément, l'extrémité proximale 121 de l'arbre d'entrainement motorisé 12 est solidarisée avec la petite base 353 du cône creux 35, et elle traverse cette dernière pour que son canal interne 12a débouche dans le volume intérieur de ce cône creux 35 et soit connecté (ou soit en relation fluidique) avec les moyens d'alimentation en eau 271, 272.

Cette extrémité proximale 121 de l'arbre d'entrainement motorisé 12 sort de la chambre de moteur 34 par l'intermédiaire d'un orifice 344 adapté, ménagé dans la paroi aval 343, à proximité de la ou des sortie(s) d'eau aval 37.
La ou les sortie(s) d'eau aval 37 est/sont située(s) sur le pourtour de la petite base 353 du cône creux 35.

Le contour de l'orifice 344 constitue un pallier pour l'extrémité proximale 121 de l'arbre d'entrainement motorisé 12.

Un peu au-delà de la paroi aval 343, on remarque que l'extrémité proximale 121 de l'arbre d'entrainement motorisé 12 traverse une paroi 291 de la canalisation d'évacuation 29 par l'intermédiaire d'un orifice 292 dont le contour fait également office de pallier.

Comme expliqué ci-dessus, l'extrémité distale 122 de l'arbre d'entrainement motorisé 12 s'étend jusqu'à l'orifice d'aspiration 7 au niveau duquel son canal central 12a débouche par l'ouverture traversante 16a.

Les extrémités proximale 121 et distale 122 de l'arbre d'entrainement motorisé 12 constituent également les extrémités proximale 121 et distale 122 du canal central 12a.

Tel qu'illustré par la figure 2, la surface intérieure 345 de la chambre de moteur 34 qui est située en regard du contour circulaire 352 de la grande base 351 de l'organe mécanique d'entrainement 35 en forme de cône, a la même forme que ledit contour circulaire 252, avec un léger jeu 38 entre les deux pour permettre le passage d'un flux d'eau nécessaire à la mise en rotation dudit organe mécanique d'entrainement 35.

On remarque encore que, dans la direction amont/aval du flux d'eau, et partant de la grande base 351 de l'organe mécanique d'entraînement 35, la paroi périphérique centrale tronconique 342 de la chambre de moteur 34 s'écarte progressivement de l'organe mécanique d'entrainement 35 en forme de cône.
A ce niveau, l'angle au sommet de la paroi périphérique centrale tronconique 342 de la chambre de moteur 34 est inférieur à l'angle au sommet de l'organe mécanique d'entrainement en forme de cône 35.

### Mise en œuvre de l'installation 1

Pour activer les postes A1, A2 de l'installation 1, la pompe à vide 20 est mise en route ; la vanne 25 de la cuve de collecte 19 est fermée ; les vannes 22 et 23 sont ouvertes pour tendre à faire le vide dans la cuve de collecte 19 et pour réaliser une aspiration dans le canal d'aspiration 4 et au niveau de l'orifice d'aspiration 7 de l'outil de grattage et d'aspiration 2 ; les vannes 272a d'alimentation en eau sont ouvertes, tout comme les vannes 33 d'évacuation d'eau.

L'eau provenant des moyens d'apport d'eau 27 pénètre dans la chambre de moteur 34 par son entrée d'eau amont 36.

Une partie du flux d'eau s'engage à l'intérieur du cône creux 35 et transite par le canal central 12a de l'arbre d'entrainement 12 pour en sortir par l'ouverture traversante 16a au niveau de l'orifice d'aspiration 7.

Une autre partie du flux d'eau qui pénètre dans la chambre de moteur 34 passe par le jeu 38, entre l'organe mécanique d'entraînement 35 conique et la surface intérieure 345 de la paroi de la chambre de moteur 34, pour ressortir par les sorties d'eau aval 37 et être évacuée par la canalisation d'évacuation 29, la tubulure 30 et la conduite d'évacuation 31.

La présence de ces courants d'eau à l'intérieur et à l'extérieur de la paroi de l'organe mécanique d'entraînement 35 réalise l'entraînement en rotation de cet organe mécanique d'entraînement 35 autour de l'axe longitudinal de tube 10, et par voie de conséquence, entraîne en rotation l'arbre d'entraînement 12 et des lames de grattage 11 également autour de l'axe longitudinal de tube 10.
Le débit de l'eau d'alimentation et les caractéristiques dimensionnelles des moyens moteurs 13 sont adaptés pour optimiser le couple de rotation des lames de grattage 11 (plusieurs dimensions de lames peuvent être envisagées en fonction de la taille des poissons à traiter, ce qui permet d'obtenir différentes puissances de rotation et plusieurs diamètres de passage pour aspirer les déchets).

L'opérateur O peut prendre en main(s) l'outil de grattage et d'aspiration 2, et il peut appliquer une pression de frottement ou de grattage sur la paroi de la cavité abdominale des poissons P, par les moyens de grattage 8, en vue de détacher les éléments indésirables tels que des parasites et/ou des restes de viscères.

Les éléments indésirables détachés sont aspirés dans le canal d'aspiration 4 avec une partie de l'eau qui sort par l'ouverture traversante 16a.

L'autre partie de l'eau (non aspirée) qui sort par l'ouverture traversante 16a peut être récupérée, au niveau d'une table de travail des postes de travail A1, A2, ou au niveau du sol, par tout moyen approprié.

Les éléments indésirables sont récupérés dans un récipient de stockage (non représenté) placé dans le fond de la cuve de collecte 19. Après extraction de la cuve de collecte 19 ils peuvent être détruits par toute technique adaptée.

Les tubulures souples/flexibles 171, 272 et 30 facilitent la manipulation dans l'espace de l'outil de grattage et d'aspiration 2 par l'opérateur O, et en particulier facilitent l'application de sa tête équipée des moyens de grattage 8 contre la paroi abdominale des poissons P.

Le bloc central 15 avec ses lames de grattage 11, monté par emboitement à l'extrémité de l'arbre d'entrainement 12 peut être facilement remplacé, en cas de détérioration ou si on souhaite utiliser d'autres formes de lames de grattage, par exemple selon le type de poisson traité. En fonction de la forme des lames de grattage utilisées, on peut également envisager la présence de carters de protection 9a adaptés et dédiés.

Dans une variante de réalisation, les moyens moteurs 13 à courant d'eau peuvent être remplacés par un actionneur électrique adapté (par exemple un moteur électrique basse tension à courant continu ou sur batterie type lithium).

## Revendications

1. Installation (1) pour enlever de la cavité abdominale de poissons (P) éviscérés des éléments indésirables tels que des parasites et/ou des restes de viscères, laquelle installation comprend un outil de grattage et d'aspiration (2) comprenant un canal d'aspiration (4) muni d'une extrémité proximale (5) et d'une extrémité distale (6),
laquelle extrémité distale (6) dudit canal d'aspiration (4) comprend un orifice d'aspiration (7) et des moyens de grattage (8) adaptés pour gratter la paroi de la cavité abdominale des poissons (P),
et laquelle extrémité proximale (5) dudit canal d'aspiration (4) est raccordée à des moyens de mise en dépression (3) adaptés pour aspirer lesdits éléments indésirables,
**caractérisée en ce qu'**elle comprend des moyens d'apport d'eau (27) pour apporter de l'eau au niveau dudit orifice d'aspiration (7) de l'outil de grattage et d'aspiration (2).

2. Installation (1) selon la revendication 1, **caractérisée en ce que** lesdits moyens de grattage (8) comprennent au moins une lame de grattage (11) mobile disposée au niveau dudit orifice d'aspiration (7) de l'outil de grattage et d'aspiration (2).

3. Installation (1) selon la revendication 2, **caractérisée en ce que** l'extrémité distale (6) de l'outil de grattage et d'aspiration (2) est en forme de tube (9) comprenant un axe longitudinal de tube (10), lequel tube (9) est muni dudit orifice d'aspiration (7) équipé desdits moyens de grattage (8),
ladite au moins une lame de grattage (11) étant entrainée en rotation, dans un plan perpendiculaire audit axe longitudinal de tube (10), par un arbre d'entrainement (12) motorisé centré sur ledit axe longitudinal de tube (10).

4. Installation (1) selon la revendication 3, **caractérisée en ce que** lesdits moyens d'apport d'eau (27) comprennent :
- des moyens d'alimentation en eau (271, 272), et
- ledit arbre d'entrainement motorisé (12) qui est creux et qui comprend une cavité interne (12a),
laquelle cavité interne (12a) comprend une extrémité proximale (121) qui est connectée auxdits moyens d'alimentation en eau (271, 272), et laquelle cavité interne (12a) comprend une extrémité distale (122) qui débouche par un orifice d'alimentation en eau (16a) au niveau dudit orifice d'aspiration (7).

5. Installation (1) selon la revendication 4, **caractérisée en ce qu'**elle comprend des moyens moteurs (13) à courant d'eau pour l'entrainement en rotation dudit arbre d'entrainement (12) motorisé, lesquels moyens moteurs (13) à courant d'eau comprennent un organe mécanique d'entrainement (35) adapté pour être entrainé en rotation par un courant d'eau provenant desdits moyens d'alimentation en eau (271, 272).

6. Installation (1) selon la revendication 5, **caractérisée en ce que** lesdits moyens moteurs (13) à courant d'eau comprennent :
- une chambre de moteur (34) munie d'au moins une entrée d'eau amont (36) connectée auxdits moyens d'alimentation en eau (271, 272) et d'au moins une sortie d'eau aval (37) connectée à une canalisation d'évacuation d'eau (29),
- un organe mécanique d'entrainement (35) en forme de cône creux, disposé dans ladite chambre de moteur (34), comprenant une grande base (351) et une petite base (353), laquelle grande base (351) est délimitée par un contour circulaire (352) et est en forme de large ouverture orientée vers ladite entrée d'eau amont (36), et laquelle petite base (353) se prolonge par ledit arbre d'entrainement (12) motorisé,
lequel arbre d'entrainement (12) motorisé traverse une paroi (343) de ladite chambre de moteur (34) à proximité de ladite au moins une sortie d'eau aval (37),
la surface intérieure (345) de ladite chambre de moteur (34) située en regard dudit contour circulaire (352) de la grande base (351) dudit organe mécanique d'entrainement (35), ayant la même forme que ledit contour circulaire (352), avec un léger jeu (38) entre les deux pour permettre le passage d'un flux d'eau nécessaire à la mise en rotation dudit organe mécanique d'entrainement (35).

7. Installation (1) selon la revendication 6, **caractérisée en ce que** ladite chambre de moteur (34) comprend une paroi périphérique centrale tronconique (342) qui entoure ledit organe mécanique d'entrainement (35) en forme de cône, l'angle au sommet de ladite paroi périphérique centrale tronconique (342) étant inférieur à l'angle au sommet dudit organe mécanique d'entrainement (35).

8. Installation (1) selon l'une quelconque des revendications 1 à 7, **caractérisée en ce que** ladite extrémité proximale (5) du canal d'aspiration (4) de l'outil de grattage et d'aspiration (2) se prolonge par une tubulure d'aspiration (17) qui aboutit dans le volume interne (18) d'une cuve de collecte (19), pour la collecte desdits éléments indésirables, lesdits moyens de mise en dépression (3) comprenant au moins une pompe à vide (20) agencée pour tendre à faire le vide dans ledit volume interne (18) de ladite cuve de collecte (19).

9. Installation (1) selon la revendication 8, **caractérisée en ce qu'**elle comprend plusieurs outils de grattage et d'aspiration (2) qui se prolongent chacun par une tubulure d'aspiration (17) aboutissant dans le volume interne (18) d'une même cuve de collecte (19), pour la collecte desdits éléments indésirables.

## Patentansprüche

1. Vorrichtung (1) zum Entfernen unerwünschter Elemente wie zum Beispiel Parasiten und/oder Eingeweidereste aus der Bauchhöhle von ausgenommenen Fischen (P), wobei die Vorrichtung ein Kratz- und Absaugwerkzeug (2) aufweist, das einen mit einem proximalen Ende (5) und einem distalen Ende (6) versehenen Saugkanal (4) aufweist,
wobei das distale Ende (6) des Saugkanals (4) ein Ansaugloch (7) und für das Abkratzen der Wandung der Bauchhöhle der Fische (P) ausgelegte Kratzmittel (8) aufweist,
und wobei das proximale Ende (5) des Saugkanals (4) mit Mitteln (3) zum Erzeugen von Unterdruck verbunden ist, die dazu ausgelegt sind, die unerwünschten Elemente anzusaugen,
**dadurch gekennzeichnet, daß** sie Wasserzuführmittel (27) aufweist, um Wasser in Höhe des Ansauglochs (7) des Kratz- und Absaugwerkzeugs (2) zuzuführen.

2. Vorrichtung (1) gemäß Anspruch 1, **dadurch gekennzeichnet, daß** die Kratzmittel (8) mindestens eine in Höhe des Ansauglochs (7) des Kratz- und Absaugwerkzeugs (2) angeordnete bewegliche Kratzklinge (11) aufweisen.

3. Vorrichtung (1) gemäß Anspruch 2, **dadurch gekennzeichnet, daß** das distale Ende (6) des Kratz- und Ansaugwerkzeugs (2) die Form eines Rohrs (9) mit einer Rohrlängsachse (10) hat, wobei das Rohr (9) mit dem mit den Kratzmitteln (8) ausgestatteten Ansaugloch (7) versehen ist,
wobei die mindestens eine Kratzklinge (11) in einer zur Rohrlängsachse (10) senkrechten Ebene durch eine motorisierte, zur Rohrlängsachse (10) zentrischen Antriebswelle (12) drehend angetrieben wird.

4. Vorrichtung (1) gemäß Anspruch 3, **dadurch gekennzeichnet, daß** die Wasserzuführmittel (27)
- Mittel (271, 272) zum Versorgen mit Wasser und
- die motorisierte Antriebswelle (12), die hohl ist und die einen inneren Hohlraum (12a) aufweist,
aufweisen,
wobei der innere Hohlraum (12a) ein proximales Ende (121) aufweist, das mit den Mitteln (271, 272) zum Versorgen mit Wasser verbunden ist, und wobei der innere Hohlraum (12a) ein distales Ende (122) aufweist, an dem eine Öffnung (16a) für die Wasserversorgung in Höhe des Ansauglochs (7) mündet.

5. Vorrichtung (1) gemäß Anspruch 4, **dadurch gekennzeichnet, daß** sie Motormittel (13) mit einem Wasserfluß für den Drehantrieb der motorisierten Antriebswelle (12) aufweist, wobei die Motormittel (13) mit Wasserfluß ein mechanisches Antriebsorgan (35) aufweisen, das dazu ausgelegt ist, durch einen von den Mitteln (271, 272) zum Versorgen mit Wasser kommenden Wasserfluß drehend angetrieben zu werden.

6. Vorrichtung (1) gemäß Anspruch 5, **dadurch gekennzeichnet, daß** die Motormittel (13) mit Wasserfluß
- eine mit einem flußaufwärtigen, mit den Mitteln (271, 272) zum Versorgen mit Wasser verbundenen Wassereintritt (36) und mindestens einem flußabwärtigen, mit einer Wasserabführkanalisation (29) verbundenen Wasseraustritt (37) versehene Motorkammer (34),
- ein mechanisches Antriebsorgan (35) mit der Form eines Hohlkegels, das in der Motorkammer (34) angeordnet ist und eine große Basis (351) und eine kleine Basis (353) aufweist, wobei die große Basis (351) durch einen kreisförmigen Umfang begrenzt ist und die Form einer großen, zum flußaufwärtigen Wassereintritt gerichteten Öffnung aufweist und wobei die kleine Basis (353) durch die motorisierte Antriebswelle (12) verlängert wird,
aufweisen,
wobei die motorisierte Antriebswelle (12) eine Wand (343) der Motorkammer (34) in der Nähe des mindestens einen Wasseraustritts (37) durchquert,
wobei die dem kreisförmigen Umfang (352) der großen Basis (351) des mechanischen Antriebsorgans (35) zugewandte innere Oberfläche (345) der Motorkammer (34) die gleiche Form wie der kreisförmige Umfang (352) hat, mit einem geringen Spiel (38) zwischen den beiden, um das Passieren eines für das in Drehung Versetzen des mechanischen Antriebsorgans (35) notwendigen Wasserflusses zu ermöglichen.

7. Vorrichtung (1) gemäß Anspruch 6, **dadurch gekennzeichnet, daß** die Motorkammer (34) eine zentrale kegelstumpfartige Umfangswand (342) aufweist, die das kegelförmige mechanische Antriebsorgan (35) umgibt, wobei der Winkel an der Spitze der zentralen kegelstumpfartigen Umfangswand (342) kleiner als der Winkel an der Spitze des mechanischen Antriebsorgans (35) ist.

8. Vorrichtung (1) gemäß einem der Ansprüche 1 bis 7, **dadurch gekennzeichnet, daß** das proximale Ende (5) des Ansaugkanals (4) des Kratz- und Absaugwerkzeugs (2) durch eine Saugleitung (17) für das Sammeln der unerwünschten Elemente verlängert wird, die im inneren Volumen (18) eines Sammelbehälters (19) endet, wobei die Mittel (3) zum Erzeugen von Unterdruck mindestens eine Vakuumpumpe (20) aufweisen, die dazu ausgelegt ist, im inneren Volumen (18) des Sammelbehälters (19) ein Vakuum anzustreben.

9. Vorrichtung (1) gemäß Anspruch 8, **dadurch gekennzeichnet, daß** sie mehrere Kratz- und Absaugwerkzeuge (2) aufweist, die für das Sammeln der unerwünschten Elemente jeweils durch eine im inneren Volumen (18) eines selben Sammelbehälters endende Saugleitung (17) verlängert werden.

## Claims

1. Installation (1) for removing undesirable elements such as parasites and/or viscera remains from the abdominal cavity of gutted fish (P), said installation comprising a scratching and suction tool (2) comprising a suction channel (4) provided with a proximal end (5) and a distal end (6),
said distal end (6) of the suction channel (4) comprising a suction hole (7) and scratching means (8) configured to scratch the abdominal cavity of fish (P),
and said proximal end (5) of the suction channel (4) being connected to vacuum means (3) configured to suck said undesirable elements,
**characterized in that** it comprises water supply means (27) for supplying water at the suction hole (7) of the scratching and suction tool (2).

2. Installation (1) according to claim 1, **characterized in that** the scratching means (8) comprise at least one mobile scratching blade (11) situated at the suction hole (7) of the scratching and suction tool (2).

3. Installation (1) according to claim 2, **characterized in that** the distal end (6) of the scratching and suction tool (2) has the shape of a tube (9) comprising a longitudinal tube axis (10), said tube (9) being provided with said suction hole (7) provided with said scratching means (8),
said at least one scratching blade (11) being rotatably driven in a plane perpendicular to said longitudinal tube axis (10) by a motorized drive shaft (12) coaxial to said longitudinal tube axis (10).

4. Installation (1) according to claim 3, **characterized in that** the water supply means (27) comprise:
- means for supplying water (271, 272), and
- said motorized drive shaft (12) that is hollow and that comprises an internal cavity (12a),
said internal cavity (12a) comprising a proximal end (121) that is connected to said means for supplying water (271, 272), and said internal cavity (12a) comprising a distal end (122) that opens at the level of the suction hole (7) by a water supply hole (16a).

5. Installation (1) according to claim 4, **characterized in that** it comprises motor means (13) operated by a water flow for rotatably driving said motorized drive shaft (12), said motor means (13) operated by a water flow comprising a mechanical driving element (35) adapted for being rotatably driven by a water flow coming from said means for supplying water (271, 272).

6. Installation (1) according to claim 5, **characterized in that** the motor means (13) operated by a water flow comprise:
- a motor chamber (34) provided with at least one upstream water inlet (36) connected to said means for supplying water (271, 272), and at least one downstream water outlet (37) connected to a water draining channel (29),
- a mechanical drive member (35) with the shape of a hollow cone, situated inside said motor chamber (34), comprising a large base (351) and a small base (353), said large base (351) being bounded by a circular outline (352) and having the shape of a large opening oriented towards said upstream water inlet (36), and said small base (353) being extended by said motorized drive shaft (12),
said motorized drive shaft (12) crossing a wall (343) of said motor chamber (34) close to said at least one downstream water outlet (37),
the inner surface (345) of said motor chamber (34) oriented towards the circular outline (352) of the large base (351) of said mechanical drive member (35) having the same shape as the circular outline (352) with a small clearance (38) between those two for allowing passing of a water flow necessary for making the mechanical drive member (35) rotate.

7. Installation (1) according to claim 6, **characterized in that** said motor chamber (34) comprises a central peripheral wall (342) having the shape of a truncated cone and surrounding said mechanical drive member (35) having the shape of a cone, the angle at the summit of said central peripheral wall (342) being smaller than the angle at the summit of the mechanical drive member (35).

8. Installation (1) according to any one of claims 1 to 7, **characterized in that** said proximal end (5) of the suction channel (4) of the scratching and suction tool (2) is extended by a suction tube (17) that ends inside the internal volume (18) of a collection tank (19) for collecting said undesirable elements, said vacuum means (3) comprising at least one vacuum pump (20) configured for trying to generate a vacuum inside said internal volume (18) of said collection tank (19).

9. Installation (1) according to claim 8, **characterized in that** it comprises several scratching and suction tools (2) each of which extends by a suction tube (17) ending inside the internal volume (18) of a same collection tank (19) for collecting said undesirable elements.
